# EUROPEAN PATENT SPECIFICATION

(11) **EP 2 611 745 B1**
(45) Date of publication and mention of the grant of the patent: **21.01.2015**
(21) Application number: 11752188.0
(22) Date of filing: 31.08.2011
(51) Int. Cl.: C03B 3/02, C03B 5/12

(54) **AN APPARATUS AND METHOD FOR MAKING A MINERAL MELT**
VORRICHTUNG UND VERFAHREN ZUR HERSTELLUNG EINER MINERALISCHEN SCHMELZE
APPAREIL ET PROCÉDÉ DE FABRICATION DE FONTE MINÉRALE

(30) Priority: 01.09.2010 EP 10174856
(43) Date of publication of application: 10.07.2013
(73) Proprietor: Rockwool International A/S, 2640 Hedehusene (DK)
(72) Inventor: HANSEN, Lars Elmekilde, DK-4000 Roskilde (DK); BØLLUND, Lars, DK-3550 Slangerup (DK)
(74) Representative: Høiberg A/S
(86) International application number: PCT/EP2011/064964
(87) International publication number: WO 2012/028638

(56) References cited:
- WO-A1-03/002469
- WO-A1-2009/118180
- US-A- 4 135 904

## Description

The present invention relates to an apparatus and method for the production of a mineral melt by burning combustible material in the presence of inorganic particulate material and thereby forming a melt. The melt can then be fiberised to form mineral fibres or used in other industrial processes.

### Background to the Invention

Traditionally, the normal way of producing a melt for slag, stone or rock fibres has been by means of a shaft furnace in which a self-supporting stack of inorganic particulate material is heated by combustion of combustible material in the furnace. The stack gradually melts and is replenished from the top, with melt draining down the stack and out from the bottom of the furnace. The normal furnace for this purpose is a cupola furnace.

It is necessary for the stack to be self-supporting and permeable to the combustion gases, which are generally generated by combustion of carbonaceous material in the stack. It is therefore necessary that everything in the stack is relatively coarse (in order that the stack is permeable) and has high physical strength and does not collapse until combustion or melting is well advanced. In practice this means that the carbonaceous material is coke and the particulate material is either coarsely crushed rock, stone or slag.

If fine particles of mineral material such as waste mineral wool are used it is necessary to incur the expense and inconvenience of forming it into briquettes. Briquetting usually uses sulphur-containing materials as binder, such as Portland cement with gypsum, and this means that the effluent is liable to have a high sulphur content, which has to be treated. The cupola or other stack furnace system also has the disadvantage that conditions in the furnace always tend to be sufficiently reducing that some of the iron is reduced to metallic iron. This necessitates separating metallic iron from the melt, reduces wool production, leads to the provision of iron waste and also tends to incur the risk of corrosion in the section containing iron and slag. Another disadvantage is that the process does not have high thermal efficiency.

Despite these disadvantages, the process using a cupola or other stack furnace has been widely adopted throughout the world for the manufacture of rock, stone or slag fibres. An alternative and entirely different system for the production of a mineral melt that avoids or reduces the disadvantages of the cupola system is disclosed in our earlier publication WO 03/002469. This system involves suspending powdered coal, or other fuel, in preheated combustion air and combusting the suspended fuel in the presence of suspended particulate mineral material in a circulating combustion chamber, i.e., a combustion chamber in which the suspended particulate materials and air circulate in a system which is or approaches a cyclone circulation system. This is commonly referred to as a cyclone furnace. The suspension of coal in preheated air, and the particulate mineral material, are introduced through the top or close to the top of the combustion chamber. Within the combustion chamber, combustion of the particulate coal occurs and the particulate material is converted to melt. The melt and particulate material that is not yet melted is thrown onto the walls of the chamber by the circulating gases and will flow down the chamber. The melt is collected in a settling tank at the bottom of the chamber.

In order to increase the energy efficiency of the cyclone furnace in WO 03/002469, the exhaust gases, which leave the circulating chamber at a temperature in the range of 1400 to 1700°C, are used to preheat the particulate material. WO 03/002469 teaches that the exhaust gases are quenched to 1000 to 1500°C and then mixed with the mineral material to preheat it to a temperature of 700 to 1050°C.

WO 2009/118180, WO 2008/019780, WO 2008/086990, WO 2009/090040 and WO 2008/086991 also disclose a cyclone system for making a mineral melt.

The cyclone furnace has significant advantages compared to cupola or other stack furnaces. With respect to fuel, it avoids the need for briquetting fine particles and a wide range of fuels can be used including, for example, plastic. Using a melting cyclone furnace eliminates the risk of reduction of the ores to iron and releases exhaust gases which are environmentally acceptable. The flexibility in melt capacity is much better than with a cupola furnace meaning that production can easily and quickly be switched, from, for example, 40% to 100% of total capacity so the time taken to respond to changing demands is greatly reduced. Furthermore, melting in a cyclone furnace is much quicker than is the case for a cupola furnace and is in the order of minutes, rather than in the order of hours.

Hence, using a melting cyclone furnace system is economically and environmentally desirable and the systems disclosed in the above-mentioned documents work well. There is, however, room for improvement in the process.

As disclosed in at least some of the above-mentioned references, the melting cyclone furnace is provided with tangential inlets into the cyclone.

It is realised that the efficiency of the combustion in the circulating combustion chamber is reduced if an uneven or fluctuating feeding of mineral material through the plurality of inlets occurs, since this has a negative influence on the rotational flow in the combustion chamber.

On this background, it is an object of the present invention to provide a method of ensuring a predetermined and stable distribution of feeding of mineral material to the inlets of the circulating combustion chamber.

### Summary of the Invention

According to a first aspect, the present invention provides an apparatus for the production of a mineral melt by burning combustible material in the presence of inorganic particulate material and thereby forming a melt, said apparatus comprising a circulating combustion chamber having at least two inlets adapted to receive a supply of a fuel, pre-heated mineral material and a combustion gas, a heat exchange system for pre-heating mineral material comprising a first pre-heater cyclone, a conduit from the circulating combustion chamber to the first pre-heater cyclone for transporting exhaust gases, an inlet for injecting the mineral material into the conduit, and a bottom cyclone outlet which is in flow communication with inlets in the circulating combustion chamber for feeding pre-heated mineral material to said combustion chamber, means for collecting a mineral melt, and wherein the outlet of said first pre-heater cyclone is provided with means for stabilising and splitting the mineral material flow into two material flows for feeding the at least two combustion chamber inlets, where the means for stabilising the mineral material flow comprises a downwardly sloping guide plate receiving the material from the cyclone outlet at a first end and channelling the material beyond the second end of said guide plate, and a downwardly sloping baffle board downstream of the guide plate for receiving the material flow from the guide plate.

According to a second aspect, the present invention provides a method suitable for being performed by an apparatus according to the first aspect of the invention, the method comprising the steps of providing a circulating combustion chamber; preheating mineral material in a heat exchange system comprising a first pre-heater cyclone; injecting fuel, preheated mineral material and combustion gas into the circulating combustion chamber through at least two inlets; combusting the fuel in the circulating combustion chamber thereby melting the mineral material to form a mineral melt and generating exhaust gases; separating the exhaust gases from the mineral melt, collecting the mineral melt and passing the exhaust gases to a heat exchange system; wherein the pre-heated mineral material flow when leaving the first pre-heater cyclone is stabilised and split in a predetermined manner into two material flows for feeding the at least two combustion chamber inlets, and wherein the material flow from the outlet of the first pre-heater cyclone is stabilised by delivering the material flow from the cyclone outlet onto a downwardly sloping guide plate at a first end thereof and channelling the material beyond the second end of said guide plate, and then impacting a downwardly sloping baffle board downstream of the guide plate such that the material guided along the guide plate and beyond the second end thereof impacts the baffle board in such a manner that the material spreads in a parabolic-like impact zone and thereby creating a curtain of downwardly flowing material when it leaves the lowermost end of the baffle board.

By the invention the above-mentioned problem associated with the feeding of material to the melting cyclone is solved. According to the invention, the flow of pre-heated mineral material in granular form is stabilised and split into two sub-flows and these two flows are then directed to inlets in the circulating combustion chamber. The outlet flow of material from the cyclone has a rotating movement due to the cyclone. However, due to the sloping and channelling effect of the guide plate, this cyclone movement is eliminated and a stabilised and relative uniform material flow is achieved. This flow is further manipulated into a regular form by the baffle board downstream of the guide plate. Advantageously, the guide plate is V-shaped to form an upwardly open channel. However, it is realised that other suitable shapes may be provided. The baffle board may preferably be plane, but can have other shapes if desired.

In preferred embodiments, the guide plate is inclined at an angle relative to horizontal between 45° and 75°, preferably between 50° and 60°. Likewise, the baffle board is inclined at an angle relative to horizontal between 45° and 75°, preferably between 60° and 70°. The angles of the guide plate and the baffle board may be chosen according to circumstances. It is found advantageous though to ensure that the baffle board is inclined relative to the guide plate such that the material guided along the guide plate and beyond the second end thereof impacts the baffle board in such a manner that the material spreads in a parabolic impact zone and creates a curtain of downwardly flowing granular material when it leaves the lorvermost end of the baffle board. This ensures a substantially uniform and substantially equally distributed flow of pre-heated granular material, which may then be distributed into two material flows in two downwardly directed flow passages by suitable means for splitting the mineral material flow comprising control means for providing a predetermined distribution of the outlet material flow. Such control means may be a vertical divider underneath the baffle board, e.g. with a substantially orthogonal orientation relative to the curtain of material flow.

According to the preferred embodiment of the invention, the heat exchange system additionally comprises a second pre-heater cyclone, a second conduit from the first pre-heater cyclone to the second pre-heater cyclone for transporting the exhaust gases, and a mineral material inlet for injecting the mineral material into the second conduit, wherein a mineral material conduit leads from the second pre-heater cyclone to the first conduit. The preheating of the mineral material in the second pre-heater cyclone is in the range of 400-900°C, preferably 450-600°C. Preferably, the apparatus further comprises a multi cyclone, a third conduit from the second pre-heater cyclone for transporting exhaust gases to the multi cyclone, and a conduit for supplying separated material from the multi cyclone to the outlet of the first pre-heater cyclone.

In a preferred embodiment of the invention, the apparatus and method is used for making mineral fibres from the mineral melt by flowing the collected mineral melt through an outlet in the circulating combustion chamber to centrifugal fiberising apparatus and forming fibres.

### Detailed Description of the Invention

The invention is in the following described in more detail with reference to the accompanying drawings, in which:
Figure 1 is a schematic diagram of an apparatus according to a preferred embodiment of the present invention;
figure 2 is a sectional side view of the first pre-heater cyclone outlet region;
figures 3 and 4 are perspective views thereof;
figure 5 is a bottom view of this first pre-heater cyclone outlet shown in figures 2-4;
figure 6 is a schematic top-view of the granular material flow through the outlet section, and
figure 7 is a schematic side view thereof.

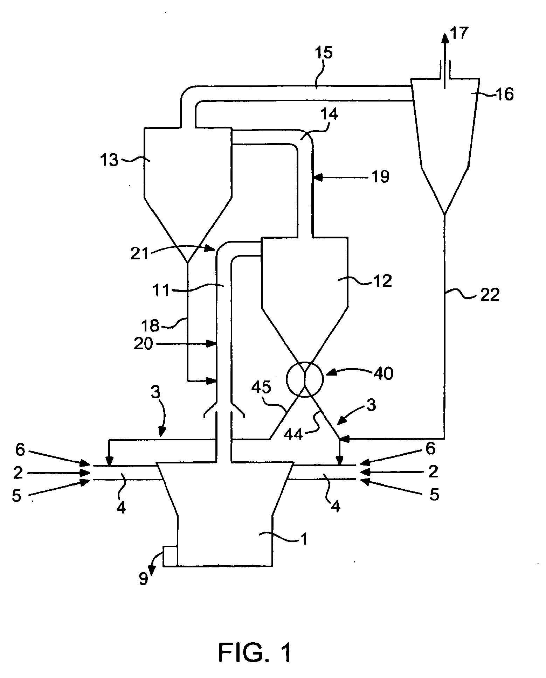

Figure 1 shows a circulating combustion chamber 1 which comprises a cylindrical top section, a frustoconical bottom section and a cylindrical base section. Particulate fuel is introduced into the circulating combustion chamber from supply 2 and is preferably coal. Preheated mineral material is introduced into the circulating combustion chamber via a mineral material conduit 3. The coal and mineral material are introduced together with combustion air via conduit 4 and secondary air which is provided in compressed air supply 5 and is introduced through at least two tangential inlets such as a lances (not shown) into the circulating combustion chamber 1 to ensure thorough mixing of the coal 2 with the combustion air 6 and to sustain the circulating motion of the combustion gases and suspended material in the circulating combustion chamber 1. Secondary fuel, in this case natural gas may also be injected through supply (not shown) into the base section of the circulating combustion chamber 1.

The coal 2 is combusted in the combustion gas 6, which is preferably oxygen-enriched air 5, in the circulating combustion chamber 1. The resultant melt 9 is collected in the base zone of the circulating combustion chamber 1 and exits the chamber via an outlet. The exhaust gases are fed through the flue 10 at the top of the circulating combustion chamber 1 to the first conduit 11 where they are used to heat the granular mineral materials about to be fed into the circulating combustion chamber 1. The exhaust gases are then led to a first pre-heater cyclone 12 where they are separated from the mineral materials which are at this point mixed together. The exhaust gases flow from the first pre-heater cyclone 12 to the second pre-heater cyclone 13 via a second conduit 14. Following the second pre-heater cyclone 13 the exhaust gases flow through conduit 15 to a dust cyclone 16 and into a further treatment 17 where indirect heat exchange with the combustion gas occurs to preheat the combustion gas. The exhaust gases are then treated to make them safe to pass to the atmosphere such as by filter (not shown).

The mineral materials are preheated prior to being added to the circulating combustion chamber 1. In detail, a first mineral material which is typically a raw stone material is supplied from supply 19 to second conduit 14 and undergoes initial preheating in second pre-heater cyclone 13. The first mineral material is then passed through first mineral material conduit 18 and introduced into first conduit 11 and subsequently passes to the first pre-heater cyclone 12. The second mineral material is provided from supply 20 to the first conduit 11 downstream of the first mineral material. The second mineral material is generally a processed mineral material, typically bonded mineral fibres, such as recycled mineral fibres. To ensure that NOx reducing conditions are generated in the first pre-heater cyclone 12, nitrogenous materials such as ammonia can be added at position 21 into the first conduit 11 immediately before the first pre-heater cyclone 12. Some of the first mineral materials may be carried up with the exhaust gases from the second pre-heater cyclone 13 through conduit 15. These are separated from the exhaust gases in dust cyclone 16 and recycled back to join the preheated mineral materials via conduit 22.

The exhaust gases leave the circulating combustion chamber 1 via the flue 10. The exhaust gases enter the first conduit 11 and are quenched from a temperature of between 1500 and 1900°C, usually around 1650°C to a temperature of between 1000 and 1500°C normally around 1300°C by quenching air 33. The first mineral material is introduced into the first conduit 11 via inlet downstream of the second mineral material which is introduced into the first conduit 11 via the conduit 18.

The chamber is generally a vertical rather than a horizontal furnace. It normally has a cylindrical top section into which the fuel, mineral material and combustion gas are injected, a frustoconical bottom section and a base section in which the melt can be collected. Alternatively the chamber can be wholly cylindrical. The base section is preferably an integral part of the chamber and can be simply the end part of the frustoconical bottom region or can be a cylindrical section at the end of the bottom region. Preferably the diameter of the base section is not larger than the diameter of the top section in contrast to traditional systems which often employ a tank at the base of the chamber of enhanced volume.

The base section has an outlet for the mineral melt through which the melt passes as a stream. This stream can then be subjected to fiberisation in any conventional manner, for instance using a cascade spinner or a spinning cup or any other conventional centrifugal fiberising process. Alternatively, the mineral melt can be used in other industrial processes. It is preferred that, at the point at which the outlet for mineral melt leaves the base section of the chamber, it does not immediately extend down but, instead, the outlet is a siphon. By "a siphon" we mean that the outlet, which is usually a tube or guttering, initially has an upward orientation relative to the opening in the chamber and subsequently has a downward orientation before leading to the fiberising equipment. This is advantageous for the melt quality as any unburnt fuel particles on the surface of the melt are kept inside the chamber.

Fuel is injected into the circulating combustion chamber. Any combustible fuel can be used. The fuel can be gaseous at room temperature, such as butane, propane, methane or natural gas, but is preferably a liquid or solid material. The fuel is preferably in particulate form and is most preferably a particulate carbonaceous material.

Where the fuel is a liquid, it is used in the form of droplets, i.e. particles of liquid fuel. In this embodiment, the fuel can be particles of petroleum oil or other carbon based liquids. However, the particulate fuel in the present invention is preferably solid. It is generally a carbonaceous material and can be any particulate carbonaceous material that has a suitable calorific value. The calorific value can be relatively low, for instance as low as 10000kJ/kg or even as low as 5000kJ/kg. Thus it may be, for instance, dried sewage sludge or paper waste. Preferably it has higher calorific value and may be spent pot liner from the aluminium industry, coal containing waste such as coal tailings, or powdered coal.

In a preferred embodiment, the fuel is powdered coal and may be coal fines but preferably some, and usually at least 50% and preferably at least 80% and usually all of the coal is made by filling lump coal, for instance using a ball mill. The coal, whether it is supplied initially as fines or lump, may be good quality coal or may be waste coal containing a high inorganic content, for instance 5 to 50% inorganic content. Preferably the coal is mainly or wholly good quality coal for instance bituminous or sub-bituminous coal (ASTM D388 1984) and contains volatiles which promote ignition.

The fuel particles preferably have a particle size in the range from 50 to 1000 µm, preferably about 50 to 200 µm. Generally at least 90% of the particles (by weight) are in this range. The average is generally about 70 µm average size, with the range being 90% below 100µm. The fuel can be fed into the chamber through a feed pipe in a conventional manner to give a stream of fuel particles. This normally involves the use of a carrier gas in which the fuel particles are suspended. The carrier gas can be air, oxygen-enriched air or pure oxygen (preferably at ambient temperature to avoid flashbacks) or a less reactive gas such as nitrogen. The carrier gas is considered to be part of the combustion gas.

At least some and preferably the majority of the fuel is injected into the top section of the circulating combustion chamber. However, in preferred embodiments some fuel, termed secondary fuel, is also injected into the bottom section of the circulating combustion chamber.

Combustion gas is also introduced into the top section of the chamber through a plurality of tangentially arranged inlets and can be at ambient temperature, but is preferably preheated. The temperature of the pre-heated primary combustion gas is often determined by the heat available in the system. Often the combustion gas is pre-heated to around 600°C, and it should at least be pre-heated to between 300 and 600°C, for instance to around 500 to 550°C. The combustion gas can be air or can be oxygen-enriched air. By "oxygen-enriched air" we mean that the gas contains more oxygen than is naturally present in air and can, in addition, contain other gases that are naturally present in air. It can also contain other gases that are not normally present in air, such as propane or methane, providing the total level of oxygen remains over that normally present in air.

In the preferred embodiment the combustion gas is oxygen-enriched air which comprises 25% to 50%, preferably 25% to 35%, oxygen by volume. In an alternative embodiment the combustion gas comprises at least 50% or at least 70% oxygen by volume or even pure oxygen. Throughout the description and claims by "pure oxygen" we mean oxygen of 92% purity or more obtained by, e.g. the vacuum pressure swing absorption technique (VPSA) or it may be almost 100% pure oxygen obtained by a distillation method. Using oxygen-enriched air is advantageous as it reduces the total volume of combustion gas needed. This means that a smaller circulating combustion chamber can be used than when air is used. As both the size of the chamber and the volume of the combustion gas are correlated with the energy needed to produce mineral fibres and the subsequent energy loss, this embodiment results in systems with higher energy efficiency. This has significant benefits in terms of increased economic viability and reduced environmental impact. Where pure oxygen is used it is preferably at ambient temperature, rather than being preheated.

The combustion gas may be introduced through a feed pipe with the fuel suspended in it, especially when the gas is at a relatively low temperature. The fuel should not begin to combust in the fuel pipe before it enters the chamber (a phenomenon known as "flash back") so low gas temperatures are needed in this embodiment. However, the combustion gas is preferably introduced separately through one or more combustion gas inlets which can be located in the vicinity of the fuel feed pipe so that the combustion gas is directed into the chamber in the same region as the fuel, to allow for efficient mixing.

Whether or not they are introduced together, the speed at which the combustion gas is injected into the chamber is relatively low (preferably between 1 and 50 m/s), so as to minimise wear of the apparatus. When the fuel and mineral material are suspended in the combustion gas, the speed is preferably between 5 and 40 m/s. When they are introduced separately, which is preferred, the injection speed of the fuel is preferably 20 to 40 m/s.

It is desirable to ensure that the preheated fuel is mixed rapidly and thoroughly with the combustion gas as this ensures that the fuel is ignited rapidly so that it can undergo pyrolysis, the initial stage of burning, almost immediately after introduction into the chamber. Having thorough mixing also ensures that the residence time of the fuel particles in the primary combustion gas is more uniform thereby leading to more efficient fuel combustion.

To help ensure rapid and thorough mixing an additional gas can be introduced in the top section of the circulating combustion chamber which travels at a higher speed than the combustion gas and the particulate fuel and, due to the speed differential, causes turbulence of the stream of fuel particles thereby breaking up the stream and ensuring rapid mixing. The additional gas is generally much less voluminous than the combustion gas and typically makes up less than 20% of the total gas injected into the combustion chamber, preferably between 5 and 15%. The additional gas can be any gas including air, nitrogen, oxygen, or a flammable gas such as propane or butane. The additional gas may be injected from an inlet so that it is adjacent the stream of fuel particles in the chamber but is preferably injected to an inlet that concentrically surrounds the fuel inlet. This concentric arrangement leads to efficient mixing, particularly where the additional gas inlet has a converging nozzle at its opening. The additional gas is preferably travelling at least 100 m/s faster than the fuel and the combustion gas, usually at least 250 m/s, preferably at least 300 m/s. In the most preferred embodiment, the injection speed of the additional gas is sonic, i.e. at or above the speed of sound.

In addition to the combustion gas that is injected into the top section of the circulating combustion chamber, it is also possible to inject some combustion gas into the bottom section. This can be termed secondary combustion gas. As with the main combustion gas, the secondary combustion gas can be at ambient temperature or preheated and preferably contains at least 25% oxygen. The secondary combustion gas can be oxygen enriched air which comprises at least 30% or 35%, preferably at least 50%, most preferably at least 70% oxygen by volume, or between 30 and 50% oxygen or pure oxygen. The secondary combustion gas can be introduced in any conventional manner but is preferably introduced using an inlet which has a converging nozzle, otherwise known as a lance.

The secondary combustion gas can be injected from one inlet in the lower section but is preferably injected from at least two, most preferably more than two such as three, four, five or six, preferably four inlets.

It is found that adding combustion gas in the bottom section of the circulating combustion chamber is very effective at ensuring full burn-out of the fuel particles. Adding oxygen at this point has been found to be much more effective than simply adding additional oxygen with the primary combustion air in the upper section. The secondary combustion gas can make up less than half of the total combustion gas which includes the main combustion gas, secondary combustion gas and any additional gas that is introduced which is combustible. The secondary combustion gas may make up between 10 to 50%, preferably 20 to 40% of the total percentage of combustion gas. In one embodiment, an additional (or secondary) solid, liquid or gaseous fuel is injected into the bottom section, and burns in the presence of the secondary combustion gas to form a flame in the bottom section. This is particularly important when oxygen-enriched air is used as the combustion gas as although the lower volumes needed advantageous increase energy efficiency. The relative amounts of the oxygen in the secondary combustion gas and the secondary fuel are selected so that there is an excess of oxygen following complete combustion of the secondary fuel in the secondary gas. Injecting secondary fuel into the bottom section is advantageous as it can be used to regulate the temperature of the melt which has collected in the base section.

Forming a flame in the bottom section in addition to the main combustion in the top section is advantageous as it is a mechanism by which the melt temperature can be changed. In particular, in the base section of the circulating combustion chamber the mineral melt flows down the walls to be collected in the base section. Hence, in this region the melt is present as a thin film on the walls of the chamber and as a bath in the base section, which is normally shallow. Applying radiant heat in this area is particularly effective as it can penetrate the whole of the melt easily. Therefore, using a flame in this region is particularly effective at heating the melt homogeneously, rapidly and within accurate parameters so by varying the flow rate of the fuel and gas in this region, the temperature of the melt can be maintained within precise limits.

As this is the purpose, the secondary fuel is preferably injected towards the lower end of the bottom section, preferably in the lower half of the frustoconical bottom section of the chamber, so that it is close to the base section. The secondary fuel can be any fuel. In one embodiment the secondary fuel comprises solely solid fuel like particulate carbonaceous materials such as coal as these are generally very cost effective and can reduce the production of NOx. In another embodiment the secondary fuel includes some liquid or gaseous fuel that combusts immediately and completely. Preferably the secondary fuel includes some solid fuel, such as coal, in amounts such as 10 to 90%, preferably 40 to 80%, most preferably 50 to 70% of the total secondary fuel, where the remainder of the secondary fuel is liquid or gaseous fuel. Preferred non-solid fuels are propane, methane or natural gas. The secondary fuel is present in a lower amount than the particulate fuel and makes up less than 50%, typically 20 to 40% of the total fuel energy.

In this embodiment the secondary combustion gas is preferably pure oxygen and is introduced through a burner inlet with the fuel so that combustion occurs immediately.

Alternatively, the secondary combustion gas can be introduced through an inlet close to the inlet for the secondary fuel and mixing can take place in the chamber.

The general motion of gases and suspended particulate material in the circulating combustion chamber is a cyclone motion. This is created by introduction of the combustion gas, as well as particulate fuel and mineral material, at an appropriate angle to sustain the swirling motion. When used, the secondary combustion gas is also preferably introduced in the same direction so as to sustain the circulating currents. The exhaust gases become separated from the mineral melt which is collected in the base of the chamber, and are passed to a heat exchange system, usually via a flue in the top of the circulating combustion chamber. The exhaust gases are then used to preheat the mineral material and optionally also the combustion gas. The exhaust gases typically leave the circulating combustion chamber at a temperature of between 1300 and 1900°C, usually 1500 to 1750°C, such as around 1550 to 1650°C.

In a preferred embodiment the first and second mineral materials are provided separately to the heat exchange system. This is advantageous when the first mineral material has a higher sintering temperature than the second mineral material. The first mineral material is typically a raw mineral material with a sintering temperature of 1200 to 1400°C whereas the second mineral material is typically a processed mineral material, such as bonded mineral fibres, which have a sintering temperature of 900 to 1100°C. To achieve maximum energy efficiency it is very important that the heat energy of the exhaust gases is utilised as fully as possible. It is also important for heat efficiency and to maintain good flow characteristics of the mineral material and hence good process efficiency that the mineral materials are not melted or softened during the preheating. This is dealt with by preheating the first mineral material prior to the second mineral material. In particular, the first mineral material is added to the heat exchange system prior to the second mineral material. By this is meant that the first mineral material is added upstream in the exhaust gases of the second mineral material. After contact with the first mineral material, the first mineral material is preheated and the exhaust gases are cooled and go on with the preheated first mineral material to preheat the second mineral material. It is usual to quench the exhaust gases before contact with the first mineral material. Typically the exhaust gases are quenched to around 1300°C to avoid softening or melting the first mineral material. The quenching is carried out with any suitable gas such as air or any suitable liquid such as ammonia.

When the exhaust gases contact the first mineral material they preheat it and are themselves cooled. In a first preheating stage the first mineral material is preferably preheated to a temperature of from 300 to 600°C, more preferably 400 to 550°C. Preferably the relative amounts of exhaust gases and first mineral material are such that the first mineral material is preheated by the end of the second preheating stage to slightly below the sintering temperature of the second mineral material, usually 750 to 850°C.

The second mineral material is subsequently added to the heat exchange system and contacts the exhaust gases and first mineral material which is suspended in the exhaust gases. The second mineral material is preheated through this contact. Preferably the second mineral material is preheated to at least 700°C and preferably to between 750 and 850°C.

Often the second mineral material is a processed product which includes organic agents such as organic binders. It is particularly advantageous to preheat the second mineral material to a temperature at which and conditions under which the organic additives are completely combusted. Therefore, the gas comprising released organic components should be heated to around 750 to 850°C for at least 1 to 2 seconds under atmospheric conditions which contain at least 2% oxygen to burn off the organic binder.

The heat exchange system preferably comprises at least one and preferably two or even three pre-heater cyclones 12, 13, 16. The first and second mineral materials are typically added to a first conduit 11 which transports exhaust gases from the circulating combustion chamber 1 to the first pre-heater cyclone 12. In the first pre-heater cyclone 12, the exhaust gases are separated from the mineral material. The mineral material, which comprises the first and second mineral materials mixed, is passed through mixed mineral material conduits 3 to the inlets of the circulating combustion chamber 1 to be melted.

Preferably nitrogen oxide (NOx) reducing conditions are generated in the first pre-heater cyclone 12. NOx is an environmental effluent that must be removed from the exhaust gases before they can be released into the atmosphere. This is normally carried out by selective non-catalytic reduction (SNCR). However, advantageously in the present invention NOx can be significantly reduced and preferably substantially eliminated in the first pre-heater cyclone by selective non-catalytic reduction (SNCR). This is an economic and convenient way to remove NOx from the exhaust gases.

The NOx reducing conditions are generated by including in the pre-heater cyclone nitrogenous material which will reduce NOx under the conditions prevailing in the pre-heater cyclone 12. The nitrogenous material may be included in the hot exhaust gas which is fed to the pre-heater cyclone 12 or may be added directly to the pre-heater cyclone 12.

The nitrogenous material which is included in the pre-heater cyclone is preferably ammonia or ammonium compound, an amine or urea, wherein the urea may be free or, more preferably, is a resinous product such as a urea formaldehyde or phenol urea formaldehyde resin. It is particularly preferred that the NOx reducing conditions are generated by including in the mineral material waste bonded mineral wool as the second mineral material which is fed to the pre-heater cyclone 12, wherein the waste bonded mineral wool contains a urea resin (usually phenol urea resin) and/or ammonia or an ammonium compound (for instance as a buffering agent for resin in the waste wool). Thus, it is possible simultaneously to utilise waste material and to react it under appropriate conditions so as to reduce a significant amount of the NOx in the exhaust gases to nitrogen.

The amount of ammonia or ammonia derivative or other NOx-reducing compound is preferably 1 to 4 (preferably 1-2 or, especially, 1-1.7) moles per mole NOx and the reaction is preferably conducted at a temperature of 800°C to 1050°C. The reaction residence time is preferably at least 0.3 seconds and most preferably at least 1 second. Typically this can be the residence time of the particulate mineral material in the pre-heater cyclone, and/or the ducting, until the exhaust gas is cooled below reaction temperature, e.g., below 800°C. Under these conditions, preferably with a temperature in the range 800 to 1050°C, substantially all the NOx is reduced to nitrogen, even though the atmosphere in the pre-heater cyclone is preferably oxidising.

Thus, according to another preferred feature the gaseous atmosphere in the pre-heater cyclone contains excess oxygen, preferably in an amount of at least 1% or 2%, but it can be up to 4%, or even up to 12% by volume by weight of the gaseous atmosphere. Despite the oxidising nature of the atmosphere, NOx is reduced by the added ammonia or other nitrogenous compound under the conditions defined for the pre-heater.

The pre-heater can thus simultaneously operate as a NOx reducer and an oxidising afterburner to burn pollutants such as hydrogen sulphide and carbon monoxide from the circulating combustion chamber. Preferably the exhaust gases which are separated from the melt and which are then fed to the pre-heater cyclone contain less oxygen than the amount which is present in the pre-heater cyclone and so preferably air or other source of oxygen is added to the exhaust gases either in the pre-heater or between the melt and the pre-heater. The exhaust gases are passed from the top of the first pre-heater cyclone 12 through a second conduit 14 to a second pre-heater cyclone 13. It is preferred that the first mineral material undergoes initial preheating in the second pre-heater cyclone 13 before being conveyed to the first conduit 11 to be further preheated by the exhaust gases. Hence, in a preferred embodiment the first mineral material is introduced into the second conduit and is preheated to an initial temperature of between 300 and 600°C, preferably to between 450 and 550°C. The exhaust gases then leave the second pre-heater cyclone 13 and are often used to heat the combustion gas by indirect heat exchange.

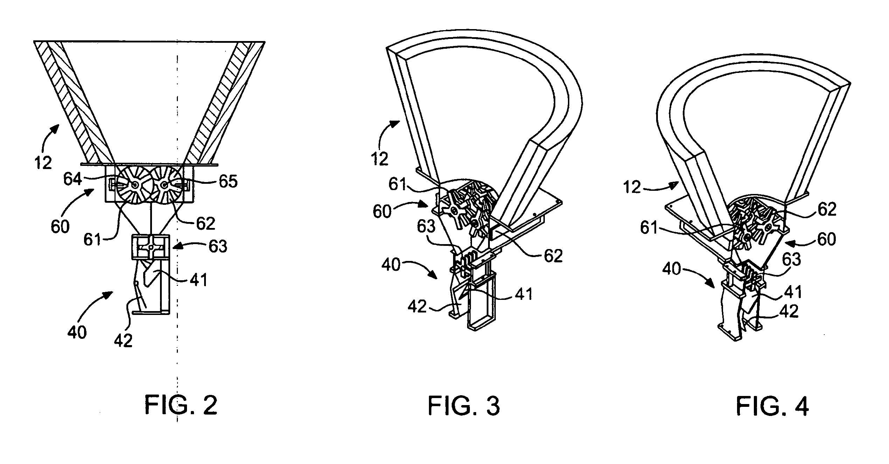

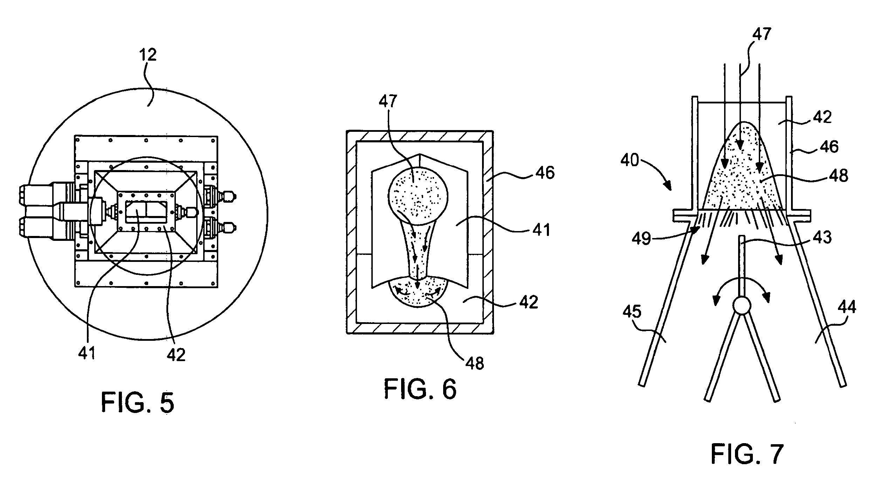

With reference to figures 2-7, at the bottom outlet 40 of the first pre-heater cyclone 12 the pre-heated mineral material is separated into two material flows for feeding two or more inlets in the circulating combustion chamber 1. In order to split the downward material flow 47 out of the cyclone 12 into two steadily and preferably equally sized material feeding flows 44, 45, it is realised by the invention that the cyclonic energy of the particulate material must be at least reduced and preferably eliminated. For achieving this purpose the outlet 40 is provided with a sloping guide plate 41 which is preferably V-shaped and thereby forms a flow channel so that the material that flows 47 out of the cyclone impacts the top section of the guide plate 41 and flows in the channel formed by the guide plate 41 downwards towards the lowermost distal end of the guide plate 41 from where the material flow leaves the guide plate 41 in a collected flow where the movement of particles in the material flow is unified. This unified flow of material impacts a sloping baffle board 42 positioned downstream of the guide plate 41. The baffle board 42 is plane whereby the collected flow spread into a parabolic-like impact pattern 48 and continues flowing along the baffle board 42 and forms a downward curtain 49 of material flow when leaving the lowermost distal end of the baffle board 42.

The guide plate 41 is inclined to divert the downward flow out of the cyclone 12 in order to unify the flow direction. This inclination may be in the order of between 45° and 60°, preferably approx. 50°.

The baffle board 42 is positioned opposite of the guide plate 41 and is also inclined but is pointing in an opposite direction as the guide plate 41; cf. the figures 2-3. The baffle board 42 may be sloping with an angle of between 50° and 75°, preferably 60-70°, more preferably approx. 67°. The amount of slope, i.e. the angular displacement relative to horizontal is influencing the lateral size of the material flow curtain 49. The higher the sloping angle is the narrower parabolic impact zone 48 and thereby consequently also the narrower curtain 49 will be.

This curtain 49 of pre-heated material is essentially planar and underneath the baffle board 42 a divider 43 is provided at the intersection of the two material flow passages 44, 45. This divider 43 may be adjusted by rotating it about an axis in order to ensure a predetermined distribution of material in the two flow passages 44, 45. Due to the high temperature in this environment, i.e. the pre-heated material, the cyclone, the outlet and the passages the pivot axis of the divider may be made of a hollow axis which may be water cooled in order to ensure the mechanical functioning of the divider.

As shown in figures 2-4, a crushing device 60 may be provided immediately upstream the bottom outlet 40 to break down any pre-heated material that has sintered together due to the high temperatures in the system and which otherwise might blog the system. In the embodiment shown, the crushing device 60 comprises a set of shredder wheels 61, 62 which defines an upper limit to the particle size of the pre-heated material passing through the crushing device 60 and into the material flow to the inlet of the circulating combustion chamber 1. Each shredder wheel set 61, 62 comprise a plurality of shredder wings arranged on a common axle 64, 65 with a predetermined distance from each other. Each wheel may comprise four equally spaced wings as shown in the figures. However another integer number of wings may alternatively be provided on each wheel. The wheels on each wheel set 61, 62 may be arranged so that the wings are arranged in a staggered configuration. The axle 64, 65 is preferably hollow and thereby adapted for water cooling in order to ensure the mechanical functioning of the shredder despite the heat. The two shredder wheel sets 61, 62 are intermeshed. The shredder wheels 61, 62 are shaped so that they do not essentially disturb the flow of the pre-heated material. Thus, most of the pre-heated material flows freely through the crushing device 60 almost without being influenced by it. A further set of wheels 63 may be provided downstream the crushing device 60.

Above, the invention is described with reference to a preferred embodiment. However, it is realised that other variants may be provided without departing from the scope of protection as defined in the accompanying claims. For instance, the guide plate may be provided with other shapes than a V-shape, such as a funnel-like shape, a gutter-like shape etc.

## Claims

1. An apparatus for the production of a mineral melt by burning combustible material in the presence of inorganic particulate material and thereby forming a melt, said apparatus comprising:
a circulating combustion chamber (1) having at least two inlets adapted to receive a supply of a fuel (2), pre-heated mineral material (3) and a combustion gas (4),
a heat exchange system for pre-heating mineral material comprising a first pre-heater cyclone (12), a conduit (11) from the circulating combustion chamber (1) to the first pre-heater cyclone (12) for transporting exhaust gases, an inlet for injecting the mineral material into the conduit (11), and a bottom cyclone outlet which is in flow communication with inlets in the circulating combustion chamber for feeding pre-heated mineral material to said combustion chamber,
means for collecting a mineral melt (9), and
**characterised in that**
the outlet of said first pre-heater cyclone (12) is provided with means (40) for stabilising and splitting the mineral material flow into two material flows for feeding the at least two combustion chamber inlets, wherein the means (40) for stabilising the mineral material flow comprises:
a downwardly sloping guide plate (41) receiving the material from the cyclone outlet at a first end and channelling the material beyond the second end of said guide plate (41), and
a downwardly sloping baffle board (42) downstream of the guide plate for receiving the material flow from the guide plate (41).

2. An apparatus according to claim 1, wherein said guide plate (41) is V-shaped.

3. An apparatus according to claim 1 or 2, wherein said baffle board (42) is plane.

4. An apparatus according to any of claims 1 to 3, wherein said guide plate (41) is inclined at an angle relative to horizontal between 45° and 75°, preferably between 50° and 60°.

5. An apparatus according to any of claims 1 to 4, wherein said baffle board (42) is inclined at an angle relative to horizontal between 45° and 75°, preferably between 60° and 70°.

6. An apparatus according to any of claims 1 to 5, wherein the baffle board (42) is inclined relative to the guide plate (41) such that the material guided along the guide plate (41) and beyond the second end thereof Impacts the baffle board (42) in such a manner that the material spreads in a parabolic impact zone (48) and creates a curtain (49) of downwardly flowing material when it leaves the lowermost end of the baffle board (42).

7. An apparatus according to claim 6, wherein the means (40) for splitting the mineral material flow comprises a vertical divider (43) underneath the baffle board (42), preferably with a substantially orthogonal orientation relative to the curtain (49) of material flow.

8. An apparatus according to any of the preceding claims, wherein the heat exchange system additionally comprises a second pre-heater cyclone (13), a second conduit (14) from the first pre-heater cyclone (12) to the second pre-heater cyclone (13) for transporting the exhaust gases, and a mineral material inlet for injecting the mineral material into the second conduit (14), wherein a mineral material conduit (18) leads from the second pre-heater cyclone (13) to the first conduit (11).

9. An apparatus according to according to claim 8, wherein the apparatus further comprises a multi cyclone (16), a third conduit (15) from the second pre-heater cyclone (13) for transporting exhaust gases to the multi cyclone (16), and a conduit (22) for supplying separated material from the multi cyclone (16) to the outlet of the first pre-heater cyclone (12).

10. A method of making a mineral melt, the method comprising the steps of:
providing a circulating combustion chamber (1);
preheating mineral material in a heat exchange system comprising a first pre-heater cyclone (12);
injecting fuel, preheated mineral material and combustion gas into the circulating combustion chamber (1);
combusting the fuel in the circulating combustion chamber (1) thereby melting the mineral material to form a mineral melt and generating exhaust gases;
separating the exhaust gases from the mineral melt, collecting the mineral melt (9) and passing the exhaust gases (10) to a heat exchange system;
**characterised in that** the pre-heated mineral material flow when leaving the first pre-heater cyclone (12) is stabilised and split in a predetermined manner into two material flows (44, 45) for feeding at least two combustion chamber inlets, and
that the material flow from the outlet of the first pre-heater cyclone (12) is stabilised by
delivering the material flow from the cyclone outlet onto a downwardly sloping guide plate (41) at a first end thereof and channelling the material beyond the second end of said guide plate (41), and then
impacting a downwardly sloping baffle board (42) downstream of the guide plate (41) such that the material guided along the guide plate (41) and beyond the second end thereof impacts the baffle board (42) in such a manner that the material spreads in a parabolic-like impact zone (48) and thereby creating a curtain (49) of downwardly flowing material when it leaves the lowermost end of the baffle board (42).

11. A method according to claim 10, additionally comprising the step of making mineral fibres from the mineral melt by flowing the collected mineral melt through an outlet (9) in the circulating combustion chamber (1) to centrifugal fiberising apparatus and forming fibres.

12. A method according to claim 10 or 11, whereby the curtain (49) of mineral material flow is split into two material flows in two downwardly directed flow passages (44, 45) by a vertical divider (43) underneath the baffle board (42), preferably with a substantially orthogonal orientation relative to the curtain (49) of material flow.

13. A method according to any of the claims 10-12, wherein the heat exchange system additionally comprises a second pre-heater cyclone (13), a second conduit (14) from the first pre-heater cyclone (12) to the second pre-heater cyclone (13) for transporting the exhaust gases, and a mineral material inlet for injecting the mineral material into the second conduit (14), wherein a mineral material conduit (18) leads from the second pre-heater cyclone (13) to the first conduit (11).

14. A method according to any of the claims 10-13, wherein the apparatus further comprises a multi cyclone (16), a third conduit (15) from the second pre-heater cyclone (13) for transporting exhaust gases to the multi cyclone (16), and a conduit (22) for supplying separated material from the multi cyclone (16) to the outlet of the first pre-heater cyclone (12).

15. A method according to any of the claims 10-14, wherein the preheating of the mineral material before splitting into two material flows is in the range of 700-1000°C, preferably 750-850°C.

## Patentansprüche

1. Vorrichtung zum Herstellen einer mineralischen Schmelze durch Verbrennen brennbaren Materials in der Gegenwart von anorganischen Feststoffen und dabei Bilden einer Schmelze, wobei die Vorrichtung umfasst:
eine zirkulierende Brennkammer (1), die mindestens zwei Einlassöffnungen aufweist, die geeignet sind, eine Zuführung eines Brennstoffs (2), vorgewärmtes mineralisches Material (3) und ein Verbrennungsgas (4) aufzunehmen,
ein Wärmetauschersystem zum Vorheizen mineralischen Materials, das einen ersten Vorheizzyklon (12), eine Leitung (11) von der zirkulierenden Brennkammer (1) zu dem ersten Vorheizzyklon (12) zum Befördern von Abgasen, einen Einlass zum Einspeisen des mineralischen Materials in die Leitung (11) und einen Bodenzyklonauslass aufweist, der in Fließverbindung mit Einlässen der zirkulierenden Brennkammer zum Einspeisen von vorgeheiztem mineralischen Material in die Brennkammer ist,
Mittel zum Sammeln einer Mineralschmelze (9), und
**dadurch gekennzeichnet, dass**
der Auslass des ersten Vorheizzyklons (12) mit Mitteln (40) zum Stabilisieren und Aufteilen des mineralischen Materialflusses in zwei Materialflüsse zum Einspeisen in die mindestens zwei Brennkammereinlässe versehen ist, wobei die Mittel (40) zum Stabilisieren des mineralischen Materialflusses umfassen:
ein schräg nach unten geneigtes Leitblech (41), das das Material von dem Zyklonauslass an einem ersten Ende aufnimmt und das Material über das zweite Ende des Leitblechs (41) hinaus führt, und
eine schräg nach unten geneigte Umlenkwand (42), die dem Leitblech nachgeordnet ist, zum Aufnehmen des Materialflusses von dem Leitblech (41).

2. Vorrichtung nach Anspruch 1, wobei das Leitblech (41) V-förmig ausgebildet ist.

3. Vorrichtung nach Anspruch 1 oder 2, wobei die Umlenkwand (42) eben ist.

4. Vorrichtung nach einem der Ansprüche 1 bis 3, wobei das Leitblech (41) in einem Winkel relativ zur Horizontalen zwischen 45° und 75°, vorzugsweise zwischen 50° und 60°, geneigt ist.

5. Vorrichtung nach einem der Ansprüche 1 bis 4, wobei die Umlenkwand (42) in einem Winkel relativ zur Horizontalen zwischen 45° und 75°, vorzugsweise zwischen 60° und 70°, geneigt ist.

6. Vorrichtung nach einem der Ansprüche 1 bis 5, wobei die Umlenkwand (42) relativ zu dem Leitblech (41) geneigt ist, so dass das Material entlang des Leitblechs (41) geführt werden kann und über das zweite Ende davon hinaus auf die Umlenkwand (42) in der Art und Weise aufprallt, dass sich das Material in einer parabelförmigen Aufprallzone (48) ausbreitet und einen Vorhang (49) von nach unten fließenden Materials bildet, wenn es das unterste Ende der Umlenkwand (42) verlässt.

7. Vorrichtung nach Anspruch 6, wobei die Mittel (40) zum Aufteilen des mineralischen Materialflusses einen vertikalen Teiler (43) unterhalb der Umlenkwand (42) aufweisen, vorzugsweise mit einer im Wesentlichen rechtwinkligen Ausrichtung bezüglich des Vorhangs (49) des Materialflusses.

8. Vorrichtung nach einem der vorangehenden Ansprüche, wobei das Wärmetauschersystem zusätzlich einen zweiten Vorheizzyklon (13), eine zweite Leitung (14) von dem ersten Vorheizzyklon (12) zu dem zweiten Vorheizzyklon (13) zum Befördern des Abgases und einen mineralischen Materialeinlass zum Einspeisen des mineralischen Materials in die zweite Leitung (14) aufweist, wobei eine mineralische Materialleitung (18) von dem zweiten Vorheizzyklon (13) zu der ersten Leitung (11) führt.

9. Vorrichtung nach Anspruch 8, wobei die Vorrichtung weiterhin einen Multizyklon (16), eine dritte Leitung (15) von dem zweiten Vorheizzyklon (13) zum Befördern des Abgases zu dem Multizyklon (16) und eine Leitung (22) zum Zuführen von vereinzeltem Material von dem Multizyklon (16) zu dem Auslass des ersten Vorheizzyklons (12) aufweist.

10. Verfahren zum Herstellen einer Mineralschmelze, wobei das Verfahren folgende Schritte umfasst:
Bereitstellen einer zirkulierenden Brennkammer (1);
Vorheizen mineralischen Materials in einem Wärmetauschersystem, das einen ersten Vorheizzyklon (12) aufweist;
Einspeisen von Brennstoff, vorgeheiztem mineralischen Material und Verbrennungsgas in die zirkulierende Brennkammer (1);
Verbrennen des Brennstoffs in der zirkulierenden Brennkammer (1), damit das mineralische Material schmilzt, um eine mineralische Schmelze zu bilden und Abgase zu erzeugen;
Abspalten der Abgase von der Mineralschmelze, Sammeln der Mineralschmelze (9) und Führen der Abgase (10) zu einem Wärmetauschersystem;
**dadurch gekennzeichnet, dass**
der vorgeheizte mineralische Materialfluss, wenn dieser den ersten Vorheizzyklon (12) verlässt, in einer vorbestimmten Art und Weise in zwei Materialflüsse (44, 45) zum Einspeisen in mindestens zwei Brennkammereinlässe stabilisiert und aufgeteilt wird, und
dass der Materialfluss von dem Auslass des ersten Vorheizzyklons (12) durch Abgeben des Materialflusses von dem Zyklonauslass auf ein erstes Ende eines schräg nach unten gerichteten Leitblechs (41) und Leiten des Materials über das zweite Ende des Leitblechs (41) hinaus, stabilisiert wird, und anschließendes
Beaufschlagen einer schräg nach unten gerichteten Umlenkwand (42) stromab des Leitblechs (41), derart, dass das Material entlang des Leitblechs (41) geführt wird und über das zweite Ende davon hinaus auf die Umlenkwand (42) in der Art und Weise aufprallt, dass sich das Material in einer parabelförmigen Aufprallzone (48) ausbreitet, und dabei einen Vorhang (49) von nach unten fließendem Material bildet, wenn es das unterste Ende der Umlenkwand (42) verlässt.

11. Verfahren nach Anspruch 10, wobei das Verfahren zusätzlich den Schritt des Herstellens von Mineralfasern aus der Mineralschmelze durch Fließen der gesammelten Mineralschmelze durch einen Auslass (9) in die zirkulierende Brennkammer (1) zu einer zentrifugalen Faserherstellvorrichtung und Bilden von Fasern aufweist.

12. Verfahren nach Anspruch 10 oder 11, wobei der Vorhang (49) von mineralischen Materialfluss in zwei Materialflüsse in zwei nach unten gerichtete Durchflussdurchgänge (44, 45) durch einen vertikalen Teiler (43), der unterhalb der Umlenkwand (42) angeordnet ist, aufgeteilt wird, vorzugsweise mit einer im Wesentlichen rechtwinkligen Ausrichtung relativ zu dem Vorhang (49) von mineralischem Materialfluss.

13. Verfahren nach einem der Ansprüche 10 bis 12, wobei das Wärmetauschersystem zusätzlich einen zweiten Vorheizzyklon (13), eine zweite Leitung (14) von dem ersten Vorheizzyklon (12) zu dem zweiten Vorheizzyklon (13) zum Befördern des Abgases und einen mineralischen Materialeinlass zum Einspeisen des mineralischen Materials in die zweite Leitung (14) aufweist, wobei eine mineralische Materialleitung (18) von dem zweiten Vorheizzyklon (13) zu der ersten Leitung (11) führt.

14. Verfahren nach einem der Ansprüche 10 bis 13, wobei die Vorrichtung weiterhin einen Multizyklon (16), eine dritte Leitung (15) von dem zweiten Vorheizzyklon (13) zum Befördern des Abgases zu dem Multizyklon (16) und eine Leitung (22) zum Zuführen vereinzelten Materials von dem Multizyklon (16) zu dem Auslass des ersten Vorheizzyklons (12) aufweist.

15. Verfahren nach einem der Ansprüche 10 bis 14, wobei das Vorheizen des mineralischen Materials vor dem Aufteilen in zwei Materialflüsse, in einem Bereich von 700°C bis 1.000°C, vorzugsweise 750°C bis 850°C, liegt.

## Revendications

1. Appareil de fabrication de fonte minérale par combustion de matière combustible en la présence de matière particulaire inorganique, en formant ainsi une fonte, ledit appareil comprenant :
une chambre de combustion de circulation (1) comportant au moins deux entrées adaptées pour recevoir une alimentation en combustible (2), en matière minérale préchauffée (3) et en gaz de combustion (4),
un système échangeur de chaleur pour préchauffer la matière minérale, comprenant un premier cyclone préchauffeur (12), un conduit (11) allant de la chambre de combustion de circulation (1) au premier cyclone préchauffeur (12) pour transporter les gaz d'échappement, une entrée pour injecter la matière minérale dans le conduit (11), et une sortie de cyclone inférieure qui est en communication d'écoulement avec les entrées dans la chambre de combustion de circulation pour fournir la matière minérale préchauffée à ladite chambre de combustion,
des moyens pour collecter une fonte minérale (9), et
**caractérisé en ce que**
la sortie dudit premier cyclone préchauffeur (12) est dotée de moyens (40) pour stabiliser et diviser le flux de matière minérale en deux flux de matière pour alimenter les au moins deux entrées de chambre de combustion, dans lequel les moyens (40) pour stabiliser le flux de matière minérale comprennent :
une plaque de guidage à pente descendante (41) recevant la matière provenant de la sortie de cyclone au niveau d'une première extrémité et canalisant la matière au-delà de la seconde extrémité de ladite plaque de guidage (41), et
une plaque déflectrice à pente descendante (42) en aval de la plaque de guidage pour recevoir le flux de matière provenant de la plaque de guidage (41).

2. Appareil selon la revendication 1, dans lequel ladite plaque de guidage (41) est en forme de V.

3. Appareil selon la revendication 1 ou 2, dans lequel ladite plaque déflectrice (42) est plane.

4. Appareil selon l'une quelconque des revendications 1 à 3, dans lequel ladite plaque de guidage (41) est inclinée selon un angle compris entre 45° et 75°, de préférence, entre 50° et 60°, par rapport à l'horizontale.

5. Appareil selon l'une quelconque des revendications 1 à 4, dans lequel ladite plaque déflectrice (42) est inclinée selon un angle compris entre 45° et 75°, de préférence, entre 60° et 70°, par rapport à l'horizontale.

6. Appareil selon l'une quelconque des revendications 1 à 5, dans lequel la plaque déflectrice (42) est inclinée par rapport à la plaque de guidage (41) de telle sorte que la matière guidée le long de la plaque de guidage (41) et au-delà de sa seconde extrémité impacte la plaque déflectrice (42) de telle manière que la matière s'étale dans une zone d'impact parabolique (48) et crée un rideau (49) de matière s'écoulant vers le bas lorsqu'elle quitte l'extrémité la plus basse de la plaque déflectrice (42).

7. Appareil selon la revendication 6, dans lequel les moyens (40) pour diviser le flux de matière minérale comprennent un diviseur vertical (43) sous la plaque déflectrice (42), ayant de préférence une orientation sensiblement orthogonale par rapport au rideau (49) de flux de matière.

8. Appareil selon l'une quelconque des revendications précédentes, dans lequel le système échangeur de chaleur comprend en outre un second cyclone préchauffeur (13), un deuxième conduit (14) allant du premier cyclone préchauffeur (12) au second cyclone préchauffeur (13) pour transporter les gaz d'échappement, et une entrée de matière minérale pour injecter la matière minérale dans le deuxième conduit (14), dans lequel le conduit de matière minérale (18) va du second cyclone préchauffeur (13) au premier conduit (11).

9. Appareil selon la revendication 8, dans lequel l'appareil comprend en outre un multicyclone (16), un troisième conduit (15) partant du second cyclone préchauffeur (13) pour transporter les gaz d'échappement jusqu'au multicyclone (16), et un conduit (22) pour fournir la matière séparée provenant du multicyclone (16) à la sortie du premier cyclone préchauffeur (12).

10. Procédé de fabrication d'une fonte minérale, le procédé comprenant les étapes suivantes :
la fourniture d'une chambre de combustion de circulation (1) ;
le préchauffage de la matière minérale dans un système échangeur de chaleur comprenant un premier cyclone préchauffeur (12) ;
l'injection de combustible, de matière minérale préchauffée et de gaz de combustion dans la chambre de combustion de circulation (1) ;
la combustion du combustible dans la chambre de combustion de circulation (1), en faisant fondre ainsi la matière minérale pour former une fonte minérale et générer des gaz d'échappement ;
la séparation des gaz d'échappement de la fonte minérale, la collecte de la fonte minérale (9) et le passage des gaz d'échappement (10) à un système échangeur de chaleur ;
**caractérisé en ce que** le flux de matière minérale préchauffé, lorsqu'il quitte le premier cyclone préchauffeur (12), est stabilisé et divisé d'une manière prédéterminée en deux flux de matière (44, 45) pour alimenter au moins deux entrées de chambre de combustion, et
**en ce que** le flux de matière provenant de la sortie du premier cyclone préchauffeur (12) est stabilisé par
la distribution du flux de matière provenant de la sortie de cyclone sur une plaque de guidage de pente descendante (41) au niveau d'une première extrémité de celle-ci et la canalisation de la matière au-delà de la seconde extrémité de ladite plaque de guidage (41), et ensuite
l'impact sur une plaque déflectrice de pente descendante (42) en aval de la plaque de guidage (41), de telle sorte que la matière guidée le long de la plaque de guidage (41) et au-delà de sa seconde extrémité impacte la plaque déflectrice (42) de telle manière que la matière s'étale dans une zone d'impact parabolique (48), en créant ainsi un rideau (49) de matière s'écoulant vers le bas, lorsqu'elle quitte l'extrémité la plus basse de la plaque déflectrice (42).

11. Procédé selon la revendication 10, comprenant en outre l'étape de fabrication de fibres minérales à partir de la fonte minérale en laissant s'écouler la fonte minérale collectée à travers une sortie (9) de la chambre de combustion de circulation (1) dans l'appareil de fibrage centrifuge et en formant des fibres.

12. Procédé selon la revendication 10 ou 11, moyennant quoi le rideau (49) de flux de matière minérale est divisé en deux flux de matière dans deux passages de flux dirigés vers le bas (44, 45) par un diviseur vertical (43) sous la plaque déflectrice (42), ayant de préférence une orientation sensiblement orthogonale par rapport au rideau (49) de flux de matière.

13. Procédé selon l'une quelconque des revendications 10 à 12, dans lequel le système échangeur de chaleur comprend en outre un second cyclone préchauffeur (12), un deuxième conduit (14) allant du premier cyclone préchauffeur (12) au second cyclone préchauffeur (13) pour transporter les gaz d'échappement, et une entrée de matière minérale pour injecter la matière minérale dans le deuxième conduit (14), dans lequel le conduit de matière minérale (18) va du second cyclone préchauffeur (13) au premier conduit (11).

14. Procédé selon l'une quelconque des revendications 10 à 13, dans lequel l'appareil comprend en outre un multicyclone (16), un troisième conduit (15) partant du second cyclone préchauffeur (13) pour transporter les gaz d'échappement vers le multicyclone (16), et un conduit (22) pour fournir la matière séparée provenant du multicyclone (16) à la sortie du premier cyclone préchauffeur (12).

15. Procédé selon l'une quelconque des revendications 10 à 14, dans lequel le préchauffage de la matière minérale avant la division en deux flux de matière est dans la plage de 700 à 1000°C, de préférence, de 750 à 850°C.
